# EUROPÄISCHE PATENTSCHRIFT

(11) **EP 3 500 525 B1**
(45) Veröffentlichungstag und Bekanntmachung des Hinweises auf die Patenterteilung: **01.07.2020**
(21) Anmeldenummer: 17749499.4
(22) Anmeldetag: 11.08.2017
(51) Int. Cl.: C01F 11/46, B01J 6/00

(54) **ZWEISTUFIGES KALZINIERVERFAHREN SOWIE ANLAGE HIERFÜR**
TWO-STAGE CALCINATION METHOD, AND PLANT FOR SAME
PROCEDE DE CALCINATION A DEUX NIVEAUX ET INSTALLATION ASSOCIEE

(30) Priorität: 17.08.2016 EP 16184511
(43) Veröffentlichungstag der Anmeldung: 26.06.2019
(73) Patentinhaber: Claudius Peters Projects GmbH, 21601 Buxtehude (DE)
(72) Erfinder: GÖCKE, Volker, 21702 Karkerbeck (DE); RAABE, Matthias, 21614 Buxtehude (DE)
(74) Vertreter: Glawe, Delfs, Moll
(86) Internationale Anmeldenummer: PCT/EP2017/070484
(87) Internationale Veröffentlichungsnummer: WO 2018/033491

(56) Entgegenhaltungen:
- WO-A1-2009/135688
- US-A1- 2008 069 762
- US-A1- 2011 168 061

## Beschreibung

Die Erfindung betrifft ein Verfahren zum Kalzinieren von Gips umfassend eine erste Stufe mit einer Flash-Kalzinierung und eine zweite Stufe zur Nach-Kalzinierung in einem Reaktionsbehälter, wobei der Gips über eine Transferleitung von der ersten zu der zweiten Stufe geführt wird.

Zur Herstellung von Gips sind diverse Kalzinierverfahren bekannt. Bei dem Kalzinieren wird feuchter Gips (Naturgips und/oder Gips aus Rauchgasentschwefelungsanlagen) durch Entzug von Kristallwasser umgewandelt. Chemisch bedeutet dies die Umwandlung von Dihydrat (CaSO4 ^{∗} 2H2O) mittels Wärme zu Halbhydrat (CaSO4 ^{∗} 1/2H2O). Hierbei kann je nach Wasserdampfpartialdruck dabei die Alpha- oder Beta-Modifikation des Halbhydrats entstehen. Ferner kann, je nach Temperaturniveau, zusätzlich noch eine sogenannte Anhydrit-Modifikation entstehen. Zur Erreichung einer hohen Qualität bei dem kalzinierten Gips sind das Temperaturprofil und der Entwässerungsverlauf sorgfältig zu kontrollieren. Es darf keine Überhitzungen geben, und ferner soll es auch möglichst nicht zu Inhomogenitäten in Bezug auf Beaufschlagung mit Wasserdampf bzw. Temperatur kommen. Andernfalls kann es lokal zu unerwünschten Phasenumwandlungen führen, die eine Qualitätsverschlechterung mit sich brächten. Praktische Bedeutung bei der Herstellung des Halbhydrats haben insbesondere direkte oder indirekte Verfahren. Unter direkt versteht man hierbei, dass das zum Kalzinieren genutzte Heißgas im direkten Kontakt mit dem Dihydrat steht. Unter indirekt versteht man hingegen die Nutzung eines Wärmetauschers zum Kalzinieren.

Aus der WO 2009/135688 A1 ist ein Verfahren zum Kalzinieren mittels eines zweistufigen Prozesses bekannt. Bei der ersten Stufe handelt es sich um eine sogenannte Flash-Kalzinierung, die innerhalb einer sehr kurzen Zeit (von nur wenigen Sekunden) eine Kalzinierung auf den gewünschten Restkristallwasserwertes des Endproduktes vornimmt. In einer nachgeschalteten zweiten Stufe ist ein Nachreaktor vorgesehen, der die Kalzinierung vollendet. Dabei weist der Nachreaktor keine eigene Beheizung auf, sondern ist wärmepassiv ausgeführt und weist lediglich eine Zufuhr von (heißem) Feuchtgas auf. Dieses Verfahren führt zu Gips mit recht hoher Qualität, weist jedoch den Nachteil auf, dass die Zuführung von heißem Feuchtgas recht aufwendig sein kann. Zum einen ist hierfür relativ viel Energie erforderlich, und zum anderen verlangt das Verfahren eine hohe Regelgüte, um die gewünschte hohe Qualität zu erzeugen.

Es ist die Aufgabe der Erfindung, ein verbessertes Verfahren zu schaffen und eine entsprechende Anlage bereitzustellen, die weniger aufwendig sind.

Die erfindungsgemäße Lösung liegt in den Merkmalen der unabhängigen Ansprüche. Vorteilhafte Weiterbildungen sind Gegenstand der abhängigen Ansprüche.

Bei einem Verfahren zum Kalzinieren von Gips umfassend eine erste Stufe mit einer Flash-Kalzinierung und eine zweite Stufe zur Fertig-Kalzinierung in einem Reaktionsbehälter, wobei der Gips über eine Transferleitung von der ersten zu der zweiten Stufe geführt wird, ist erfindungsgemäß vorgesehen ein indirektes Beheizen in der zweite Stufe, wobei in der zweiten Stufe Wasserdampf rezirkuliert wird ohne Zuführung von externem Dampf und/oder Wasser. Vorzugsweise wird das Kalzinieren in der zweiten Stufe als langsame Kalzinierung durchgeführt.

Kern der Erfindung ist der Gedanke, eine Kombination der Flash-Kalzinierung in der ersten Stufe mit einer indirekten vollständigen Kalzinierung in der zweiten Stufe zu kombinieren. Die indirekte Beheizung ermöglicht eine weitgehend geschlossene Prozessführung, die erfindungsgemäß durch eine Rezirkulation des Wasserdampfs in dem Reaktionsbehälter der zweiten Stufe realisiert ist. Durch die Rezirkulation wird eine Zufuhr von zusätzlichem Dampf zur zweiten Stufe, wie in dem genannten Stand der Technik erforderlich, überflüssig. Sie ist gemäß der Erfindung sogar zu vermeiden. Denn durch die Rezirkulation steht ein insoweit geschlossener Kreislauf, der ein wesentlich günstigeres Regelungsverhalten aufweist.

Eine Flash-Kalzinierung erfolgt bei Temperaturen deutlich oberhalb der Kalziniertemperatur von 90 °C, insbesondere bei Temperaturen von über 130 °C. Die Verweilzeit liegt im Sekundenbereich, insbesondere zwischen 1 und 30 Sekunden. Ein Überdruck ist in der Regel nicht vorgesehen.

Unter einer langsamen Kalzinierung wird eine Kalzinierung verstanden, die mindestens eine Größenordnung länger dauert als eine Flash-Kalzinierung, vorzugsweise mindestens das Vierzigfache. Insbesondere haben sich Verweildauern von 6 bis 40 Minuten, vorzugsweise 10 bis 25 Minuten bewährt. Dies kann unter Umgebungsdruckbedingungen, optional aber unter Überdruckbedingungen stattfinden, insbesondere zwischen 2 und 4,5 bar Überdruck, vorzugsweise 2,5 bis 3,5 bar Überdruck. Die Temperatur liegt etwas oberhalb der Kalziniertemperatur, insbesondere von maximal 160 °C.

Die Erfindung beruht auf der Erkenntnis, dass mit dem aus getriebenen Kristallwasser aus der zweiten Stufe ein autarker Wasserdampflieferant zur Verfügung steht, der durch die Rezirkulation vollständig zur Versorgung der zweiten Stufe mit dem erforderlichen Wasserdampf herangezogen werden kann. Damit kann ein hoher Wasserdampfanteil in der zweiten Kalzinier-Stufe aufrechterhalten werden, ohne dass eine separate Dampferzeugung benötigt würde. Dadurch entsteht nur wenig oder kein Anhydrit. Eine externe Dampferzeugung oder eine Zuführung von anderweitig verfügbarem Wasserdampf zu der zweiten Stufe ist dank der Erfindung nicht mehr erforderlich. Das bedeutet einen geringeren Aufwand der Prozessführung, woraus eine Verringerung des Energieaufwandes resultieren kann. Damit kombiniert die Erfindung geringen Aufwand mit hoher Qualität.

Für das erfindungsgemäße Verfahren besonders bewährt hat sich das Einstellen eines übergroßen Kristallwassergehalts in der Transferleitung. Es wird unter "übergroß" ein Kristallwassergehalt verstanden, der größer ist als der Zielkristallwassergehalt der nachfolgenden, zweiten Stufe. Damit wird der Kristallwassergehalt beim Übergang von der ersten zur zweiten Stufe planvoll zu hoch eingestellt. Dies erscheint widersinnig, da an sich ja mit der Kalzinierung eine Reduktion des Kristallwassers erreicht werden soll. Jedoch hat die Erfindung erkannt, dass mit diesem Einstellen eines übergroßen Kristallwassergehalts das Kalzinierergebnis der zweiten Stufe unter Nutzung der erfindungsgemäßen Rezirkulation deutlich verbessert werden kann.

Zweckmäßigerweise erfolgt die Rezirkulation variabel. Unter "variabel" wird verstanden, dass die Rezirkulation mit unterschiedlichem Rezirkulationsgrad durchgeführt wird. Wird der Rezirkulationsgrad vermindert, so wird ein immer größer werdender Anteil der Abluft von dem Reaktionsbehälter weggeführt und nicht mehr rezirkuliert. Zweckmäßigerweise geschieht dies durch Ableiten von Abgas zur Anpassung des Wassergehalts in der zweiten Stufe. Die Beheizung wird ggf. entsprechend nachgeführt, so dass der Wärmeverlust durch niedrigeren Rezirkulationsgrad ausgeglichen wird und umgekehrt.

Mit Vorteil wird der rezirkulierte Wasserdampf über eine Fluidisiereinrichtung in den Reaktionsbehälter rückgeführt. Durch die Rückführung über die Fluidisiereinrichtung ergibt sich eine besonders günstige Vermischung des rezirkulierten Wasserdampfs mit dem zu kalzinierenden Gut. Damit wird eine gleichmäßige Beaufschlagung mit Wasserdampf gesichert, sodass es nicht zu lokalen Inhomogenitäten kommen kann. Damit wirkt es sehr günstig auf die Beibehaltung einer hohen Qualität.

Zweckmäßigerweise weist die Rezirkulation ein regelbares Gebläse auf. Damit kann auf einfache und vorteilhafte Weise der Rezirkulationsgrad durch veränderte Ansteuerung des Gebläses eingestellt werden. Dies ermöglicht eine robuste und einfach zu regelnde Verfahrensweise. Besonders bevorzugt ist es, wenn das Regulieren des Gebläses zum Einstellen eines gewünschten Rezirkulationsgrads und/oder Wertes für einen Zielwasserdampfs Anteil dient.

Das Kalzinieren in der zweiten Stufe findet vorzugsweise bei einer Temperatur von weniger als 160 °C statt. Vorzugsweise ist die Temperatur zwischen 120 °C und 150 °C. Mit diesem Temperaturbereich wird zum einen eine vollständige Kalzinierung sichergestellt, zum andern aber wird durch Vermeiden von Übertemperatur das Risiko einer unerwünschten Bildung von Anhydrit entscheidend verringert.

Mit Vorteil wird der Kristallwassergehalt in der Transferleitung eingestellt auf einen Wert von 8 % bis 20 %, vorzugsweise von 10 % bis 16 %. Mit dieser Einstellung ist sichergestellt, dass ausreichend Wasserdampf für die Rezirkulation zur Verfügung steht und damit die zweite Kalzinier-Stufe zufriedenstellend arbeiten kann. Zum anderen wird damit die Grundlage für eine günstige Regelung in der zweiten Stufe gelegt, da diese somit ausschließlich für eine Verringerung des Kristallwassergehalts zu sorgen hat. Schwankungen können damit besser ausgeglichen werden.

Zweckmäßigerweise wird der Zielkristallwassergehalt auf einen Wert von 5 % bis 7 %, vorzugsweise zwischen 5,5 % und 6,5 % eingestellt. Damit wird ein qualitativ hochwertiges Halbhydrat geschaffen, welches einen geringen Wasserbedarf bei der Weiterverarbeitung des Produkts aufweist.

Die Erfindung erstreckt sich ferner auf eine Kalzinieranlage zum Kalzinieren von Gips umfassend einen Kalzinator, der zur Flash-Kalzinierung ausgebildet ist, als erste Stufe und einen in Prozesslaufrichtung dahinter angeordneten Reaktionsbehälter als zweite Stufe, der zur Fertig-Kalzinierung ausgebildet ist, wobei der Gips über eine Transferleitung von der ersten zu der zweiten Stufe geführt wird, über eine Abfuhreinrichtung aus der zweiten Stufe entnommen wird, und erfindungsgemäß der Reaktionsbehälter mit einer indirekten Beheizung versehen und dampfautark ausgebildet ist mit einer Rezirkulationseinrichtung für Wasserdampf.

Ebenso erstreckt sich die Erfindung auf einen Nachrüstreaktor, der einem Flash-Kalzinierer mittels einer Transferleitung nachgeschaltet ist, wie vorstehend beschrieben. Der Nachrüstreaktor weist eine Abfuhreinrichtung für den kalzinierten Gips und eine vorzugsweise gesonderte Abluftleitung für Wasserdampf auf. Ferner weist der Nachrüstreaktor einer eigene Rezirkulationseinrichtung, mittels welcher der so abgezogene Wasserdampf rezirkuliert wird. Indem er wieder direkt in den Nachrüstreaktor eingebracht, kann er so unmittelbar zum Weiterlaufen der im Nachrüstreaktor ablaufenden Reaktion beitragen. Zweckmäßiger weist die Rezirkulationseinrichtung ein Gebläse zur Rückführung des Wasserdampfs auf.

Zur näheren Beschreibung und für weitere Einzelheiten wird auf vorstehende Erläuterung zum Verfahren verwiesen.

Die Erfindung wird nachfolgend unter Bezugnahme auf die beigefügte Zeichnung anhand eines Ausführungsbeispiels näher erläutert. Es zeigen:
- Fig. 1: eine schematische Übersichtsdarstellung eines Ausführungsbeispiels; und
- Fig. 2: eine Schnittansicht eines Reaktionsbehälters der Kalzinieranlage gemäß Fig. 1.

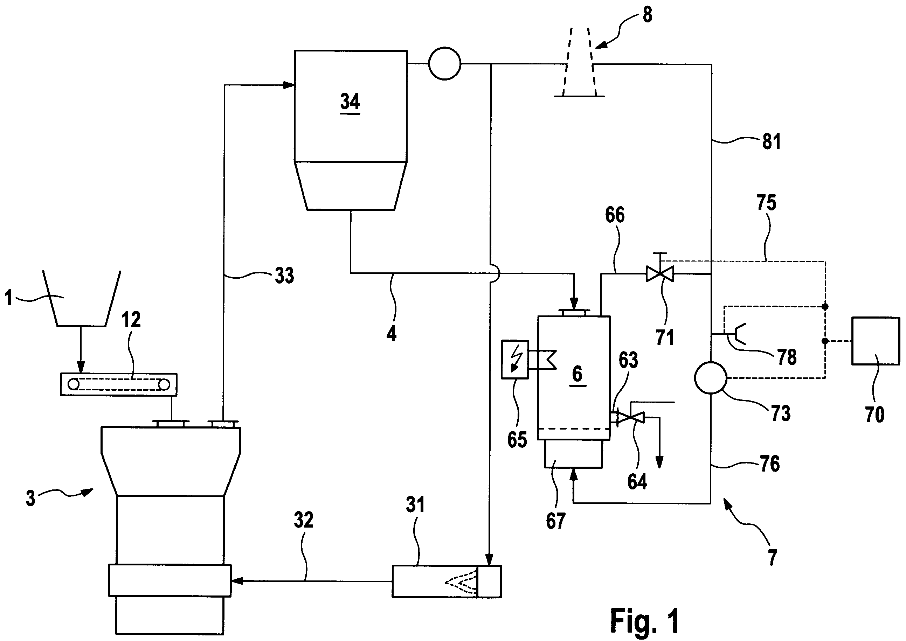

In Figur 1 ist ein Ausführungsbeispiel für eine Anlage zum Kalzinieren von Gips erläutert.

Rohmaterial für den zu kalzinierenden Gips wird an einer Aufgabestelle 1 in die Kalzinieranlage eingebracht. Bei dem Rohmaterial kann es sich um Rohgips handeln, oder um recycelte Gipsprodukte, wie Gipsbauplatten, und auch um REA-Gips aus Rauchgasentschwefelungsanlagen (REA). Das Anwendungsgebiet der Erfindung ist nicht nur auf solchen Gips beschränkt, sondern erstreckt sich auch auf andere Arten von synthetischem Gips.

Von der Aufgabestelle 1 gelangt das Gips-Rohmaterial über eine Förderstrecke 12 in einen Flash-Kalzinator, der in dem dargestellten Ausführungsbeispiel als Kalziniermühle 3 ausgebildet ist. Dort wird der Gips zerkleinert und kalziniert. Die Kalzinierung erfolgt als Flash-Kalzinierung. Dies bedeutet eine kurze Verweilzeit von unter 30 Sekunden bei einer AustrittsTemperatur von 150°C bis 160°C, also oberhalb der eigentlichen Kalziniertemperatur. Dazu ist an die Kalziniermühle 3 ein Heißgasgenerator 31 über eine Zuleitung 32 angeschlossen, worüber das Heißgas mit einer Temperatur von ca. 620 °C zugeführt wird.

Nach erfolgter Flash-Kalzinierung (die erfindungsgemäß nicht vollständig zu sein braucht) bei einer Verweildauer von beispielsweise nur 20 Sekunden wird der noch über 150°C-heiße Gips über eine Steigleitung 33 von der Kalziniermühle 3 zu einer Filteranlage 34 geführt. Von dort führt eine Transferleitung 4 an einen erfindungsgemäßen Reaktionsbehälter 6. Dort verweilt es für 20 Minuten und kalziniert in dieser Zeit fertig. Dies erfolgt ohne externe Zuführung von zusätzlichem Wasserdampf allein unter Nutzung der Feuchtigkeit des zugeführten Gipses nach der Flash-Kalzinierung. Die Funktionsweise des Reaktionsbehälters 6 wird später noch näher beschrieben. Von dem Reaktionsbehälter 6 wird der immer noch heiße Gips über eine Abfuhreinrichtung 63, die eine Druckschleuse 64 umfasst, abgeführt zum nachfolgenden Kühlen (nicht dargestellt). Zur Abführung von Abluft ist eine Anlage für Systemabluft 8 vorgesehen. An sie sind die Kalziniermühle 3, der Filter 34 und der Reaktionsbehälter 6 angeschlossen.

Weiter ist eine Rezirkulationsanlage 7 vorgesehen. Von einer oben an dem Reaktionsbehälter angeordneten Abluftleitung 66 wird Abluft aus dem Reaktionsbehälter 6 abgezogen und über ein Druckregelventil 71 und eine Rezirkulationsleitung 76 mit einem Gebläse 73 rückgeführt, um wieder in den Reaktionsbehälter 6 eingeblasen zu werden über eine an dessen Boden angeordnete Fluidisiereinrichtung 67. Diese umfasst Fluidisierdüsen 68 und einen Fluidisierboden 66 im unteren Bereich des Reaktionsbehälters 6. Zur Beheizung des Reaktionsbehälters 6 ist ein Wärmetauscher 65 vorgesehen, über den eine indirekte Beheizung vorgenommen wird. Wegen der indirekten Beheizung erfolgt dies "trocken", d. h. ohne Zufuhr von Feuchtigkeit. Die Kalzinierung innerhalb des Reaktionsbehälters 6 erfolgt allein unter Nutzung der indirekten Wärmezufuhr und der Feuchte des eingebrachten Gipses, die mittels der Rezirkulationsanlage 7 dem Prozess immer wieder zur Verfügung gestellt wird.

Zur Regelung der Rezirkulation ist ein Steuergerät 70 vorgesehen. Es wirkt mit seiner Ausgangsignalleitung 75 auf das Druckregelventil 71 und das Gebläse 73. Das Druckregelventil 71 regelt den Druck im Reaktionsbehälter 6 und ist über ein T-Stück an die Rezirkulationsleitung 76 und an eine Abgasleitung 81 angeschlossen, die zu einem Abluftkamin 8 führt. Mittels des Steuergeräts 70 kann durch Verstellen des Gebläses 73 (Einstellen der Gebläseleistung) die Rezirkulierungsmenge und damit der Rezirkulationsgrad der Rezirkulationsanlage 7 verändert werden. In der Rezirkulationsleitung 76 ist zusätzlich noch eine Fremdluftklappe 78 angeordnet, um auch bei niedrigen Rezirkulationsgraden durch Zuführen von Außenluft eine ausreichende Menge an Fluidisiergas zu erhalten.

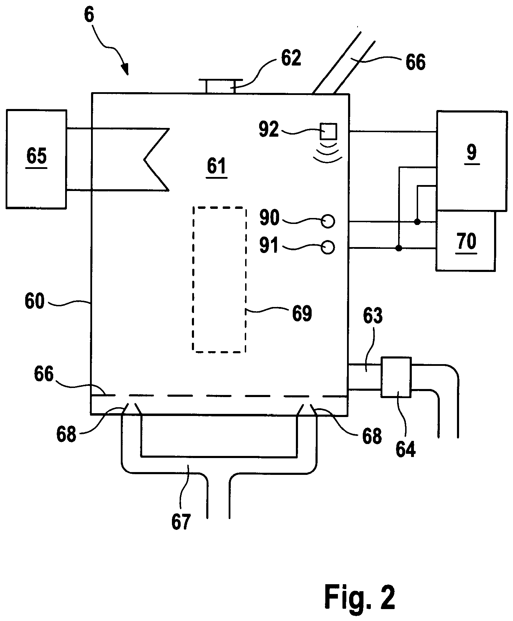

Ein Ausführungsbeispiel für den Reaktionsbehälter 6 ist in Figur 2 näher dargestellt. Der Reaktionsbehälter 6 umfasst als Hauptkomponenten ein Gehäuse 60, welches einen Arbeitsraum 61 umschließt, und eine am oberen Ende angeordnete Zufuhreinrichtung 62, in welche die Transferleitung 4 angeschlossen ist, und die im unteren Bereich angeordnete Abfuhreinrichtung 63, welche den nun vollständig kalzinierten Gips abtransportiert. Im dargestellten Ausführungsbeispiel ist das Gehäuse 60 von zylinderförmiger Gestalt, wobei die Zufuhreinrichtung 62 in einer oberen Stirnwand und die Abfuhreinrichtung 63 nahe des Bodens angeordnet sind. In dem Inneren des gleichfalls zylinderförmigen Arbeitsraums 61 ist ein Fluidisierboden 66 in horizontaler Richtung angeordnet. Der Fluidisierboden 66 umfasst im Wesentlichen einen Boden mit darunter angeordneten Hohlkammern zur Zuführung von Fluidisiergas, welches durch Öffnungen in dem Fluidisierboden 66 nach oben austreten kann, und dabei eine auf dem Fluidisierboden 66 aufliegende Schicht des zu behandelnden Guts durchströmt und fluidisiert. Das Fluidisiergas wird über am unteren Ende des Reaktionsbehälters 6 angeordneten Fluidisierdüsen der Fluidisieranlage 67 eingeblasen.

In der Achse des zylindrischen Arbeitsraums 61 ist unterhalb der Zufuhreinrichtung 62 ein von unten nach oben verlaufendes Steigrohr 69 vorgesehen. Es weist einen metallischen Rohrmantel auf, der einen freien Querschnitt aufweist, der etwa ein Fünftel der Länge des Steigrohrs beträgt. Das im Steigrohr 69 strömende Gasgemisch reißt Partikel des zu behandelnden Guts aus der Umgebung mit, wodurch die mitgerissenen Partikel des Guts wieder in den oberen Bereich des Arbeitsraums 61 befördert werden. Es bildet sich damit eine Umwälzbewegung, Durch sie kann unter Ausnutzung der Feuchte des Gasgemisch und der indirekten Beheizung über den Wärmetauscher 65 des über die Zufuhreinrichtung 62 eintretenden Guts eine effektive Nachkalzinierung erreicht werden.

Das Steuergerät 70 ist verknüpft mit einer Steueranlage 9, die ferner dazu ausgebildet ist, die Temperatur und die Verweilzeit im Reaktionsbehälter 6 zu steuern. An dem Reaktionsbehälter 6 angeordnet sind Sensoren ein Temperatursensor 90, ein Feuchtesensor 91 und ein Füllstandssensor 92, welche an die Steueranlage 9 angeschlossen sind. Die Steueranlage 9 verknüpft die gemessenen Werte und wirkt auf die Beheizung mittels des Wärmetauschers 65 und die Druckschleuse 64 der Abfuhreinrichtung ein zur Regelung von Temperatur und Verweilzeit. Weiter reguliert das Steuergerät 70 über das Druckregelventil 71 den Druck in dem Reaktionsbehälter 6. Zur Feuchteerhöhung wird der Rezirkulationsgrad erhöht und zur Feuchtesenkung wird der Rezirkulationsgrad veringert und ggf. Umgebungsluft zugeführt. Mit einer Erhöhung des Rezirkulationsgrads ergibt sich eine bessere Temperaturhaltung im Reaktionsbehälter 6, da weniger Verluste durch Abluft entstehen.

Der von der Kalziniermühle 3 nur teilweise kalzinierte Gips wird fertigkalziniert, das heißt die Umwandlung Dihydrat zu Halbhydrat wird vervollständigt, und ggf. vorhandenes Anhydrit (AIII) wird zu Halbhydrat.

Damit wird erreicht, dass der von der Kalziniermühle 3 kommende Gips unter Nutzung seiner eigenen Feuchtigkeit kontrolliert fertigkalziniert wird. Es kann so dank des Rezirkulationsanlage 7 und des Wärmetauschers 65 der gewünschte Zielkristallwassergehalt und die gewünschte Qualität für den kalzinierten Gips eingestellt werden.

Damit kann eine Vergleichmäßigung und Verbesserung der Qualität des kalzinierten Gipses erreicht werden. Zum einen ergibt sich eine Vergleichmäßigung durch Ausgleich kurzzeitiger Schwankungen dank der durch den Aufenthalt im Arbeitsraum 61 erreichten Pufferung. Weiter ergibt sich eine Reduzierung von unerwünschten löslichen Anhydritanteilen sowie von Dihydratanteilen. Ein weiterer beträchtlicher Vorteil liegt in der möglichen Regulierung von Wasser- und Gipswert, Abbindezeit und Restkristallwasser durch Steuerung des Rezirkulationsgrads und der Verweilzeit in dem Arbeitsraum 61.

## Patentansprüche

1. Verfahren zum Kalzinieren von Gips umfassend eine erste Stufe mit einer Flash-Kalzinierung und eine zweite Stufe zur Fertig-Kalzinierung in einem Reaktionsbehälter, wobei der Gips über eine Transferleitung von der ersten zu der zweiten Stufe geführt wird,
**gekennzeichnet durch**
ein indirektes Beheizen, welches in der zweite Stufe erfolgt, wobei in der zweiten Stufe Wasserdampf rezirkuliert wird ohne Zuführung von externem Dampf und/oder Wasser.

2. Verfahren nach Anspruch 1, **gekennzeichnet durch** Einstellen eines übergroßen Kristallwassergehalts in der Transferleitung, der über einem Zielkristallwassergehalt der zweiten Stufe liegt.

3. Verfahren nach Anspruch 1 oder 2, **gekennzeichnet durch** eine variable Rezirkulation mit unterschiedlichem Rezirkulationsgrad, wobei vorzugsweise auf einen gewünschten Zielkristallwassergehalt des Gipses geregelt wird, wobei vorzugsweise der Rezirkulationsgrad modifiziert wird durch Ableiten von Abgas zur Anpassung des Wasserdampfgehalts in der zweiten Stufe.

4. Verfahren nach einem der vorangehenden Ansprüche, **dadurch gekennzeichnet, dass** rezikulierter Wasserdampf über eine Fluidisiereinrichtung in einen Reaktionsbehälter für die zweite Stufe rückgeführt wird, wobei vorzugsweise der Reaktionsbehälter mit Überdruck beaufschlagt wird.

5. Verfahren nach einem der vorangehenden Ansprüche, **dadurch gekennzeichnet, dass** die Rezirkulation ein regelbares Gebläse umfasst, wobei vorzugsweise durch Regulieren des Gebläses ein gewünschter Rezirkulationsgrad eingestellt wird.

6. Verfahren nach einem der vorangehenden Ansprüche, **dadurch gekennzeichnet, dass** die Fertig-Kalzinierung in dem Reaktionsbehälter unter Überdruckbedingungen stattfindet, insbesondere zwischen 2 und 4,5 bar Überdruck, vorzugsweise 2,5 bis 3,5 bar Überdruck.

7. Verfahren nach einem der vorangehenden Ansprüche, **dadurch gekennzeichnet, dass** die Verweildauer des Gips in der zweiten Stufe 6 bis 40 Minuten, vorzugsweise 10 bis 25 Minuten, weiter vorzugsweise 15 bis 20 Minuten beträgt.

8. Verfahren nach einem der vorangehenden Ansprüche, **dadurch gekennzeichnet, dass** das Kalzinieren in der zweiten Stufe bei einer Temperatur von weniger als 160 °C, vorzugsweise zwischen 120 und 150 °C erfolgt.

9. Verfahren nach einem der vorangehenden Ansprüche, **gekennzeichnet durch** Einstellen eines Kristallwassergehalts in der Transferleitung von 8% bis 20%, vorzugsweise von 10% bis 16%, wobei vorzugsweise der Zielkristallwassergehalt auf einen Wert von 5 bis 7%, weiter vorzugsweise 5,5 bis 6,5% eingestellt wird.

10. Verfahren nach einem der vorangehenden Ansprüche, **dadurch gekennzeichnet, dass** es kontinuierlich durchgeführt wird.

11. Kalzinieranlage zum Kalzinieren von Gips umfassend einen Kalzinator (3), der zur Flash-Kalzinierung ausgebildet ist, als erste Stufe und einen in Prozesslaufrichtung dahinter angeordneten Reaktionsbehälter (6) als zweite Stufe, der zur Fertig-Kalzinierung ausgebildet ist, wobei der Gips über eine Transferleitung (4) von der ersten zu der zweiten Stufe geführt wird und über eine Abfuhreinrichtung (63) aus der zweiten Stufe entnommen wird,
**dadurch gekennzeichnet, dass**,
der Reaktionsbehälter (6) mit einer indirekten Beheizung (65) versehen ist und dampfautark ausgebildet ist mit einer Rezirkulationseinrichtung (7) für Wasserdampf.

12. Kalzinieranlage nach Anspruch 11, **dadurch gekennzeichnet, dass** eine Regelung (70) vorgesehen ist, die für eine variable Rezirkulation im Reaktionsbehälter (6) mit unterschiedlichem Rezirkulationsgrad ausgebildet ist, vorzugsweise durch Ableiten von Abgas zur Anpassung des Wasserdampfgehalts in der zweiten Stufe.

13. Kalzinieranlage nach Anspruch 12, **dadurch gekennzeichnet, dass** die Regelung (70) weiter einstellbar ist auf einen übergroßen Kristallwassergehalt in der Transferleitung (4), der über einem Zielkristallwassergehalt der zweiten Stufe liegt.

14. Kalzinieranlage nach einem der Ansprüche 11 bis 13, **dadurch gekennzeichnet, dass** der Reaktionsbehälter (6) als ein Überdruckbehälter ausgeführt ist.

15. Nachrüstkalzinierreaktor umfassend einen Anschluss (62) für eine Transferleitung (4), die ausgebildet ist zur Zufuhr von Gips aus einem Flash-Kalzinierer (3), und einem Nachrüstreaktor (6), der als zweite Stufe dem Flash-Kalzinierer (3) nachgeschaltet ist,
**dadurch gekennzeichnet, dass**
der Nachrüstreaktor (6) mit einer indirekten Beheizung (65) versehen ist und dampfautark ausgebildet ist mit einer Rezirkulationseinrichtung (7) für Wasserdampf.

16. Nachrüstreaktor nach Anspruch 15, **dadurch gekennzeichnet, dass** er als ein Überdruckbehälter ausgeführt ist und/oder eine Regelung nach Anspruch 12 oder 13 vorgesehen ist.

17. Nachrüstreaktor nach Anspruch 15 oder 16, **dadurch gekennzeichnet, dass** an dem Nachrüstreaktor (6) eine Abfuhreinrichtung (63) für den kalzinierten Gips und ferner eine Abluftleitung (66) für Dampf angeordnet ist.

18. Nachrüstreaktor nach Anspruch 17, **dadurch gekennzeichnet, dass** die Abluftleitung (66) für Dampf mit der Rezirkulationseinrichtung (7) derart verbunden ist, dass der Dampf direkt wieder in die Nachrüstreaktor eingebracht wird.

19. Nachrüstreaktor nach einem der Ansprüche 15 bis 18, **dadurch gekennzeichnet, dass** die Rezirkulationseinrichtung (7) ein vorzugsweise regelbares Gebläse (73) umfasst.

## Claims

1. Method for calcining gypsum, comprising a first stage, with flash calcination, and a second stage, for calcination to completion in a reaction vessel, wherein the gypsum is guided via a transfer line from the first stage to the second stage,
**characterized by**
indirect heating which is realized in the second stage, wherein, in the second stage, water vapour is recirculated without external vapour and/or water being supplied.

2. Method according to Claim 1, **characterized by** setting of an excessively high content of water of crystallization in the transfer line, which is greater than a target content of water of crystallization of the second stage.

3. Method according to Claim 1 or 2, **characterized by** variable recirculation with differing degree of recirculation, wherein preferably, regulation to a desired target content of water of crystallization of the gypsum is realized, wherein preferably, the degree of recirculation is modified through removal of waste gas for the purpose of adaptation of the water vapour content in the second stage.

4. Method according to one of the preceding claims, **characterized in that** recirculated water vapour is returned via a fluidization device into a reaction vessel for the second stage, wherein preferably, the reaction vessel is acted on by positive pressure.

5. Method according to one of the preceding claims, **characterized in that** the recirculation involves a regulable blower, wherein preferably, a desired degree of recirculation is set by way of regulation of the blower.

6. Method according to one of the preceding claims, **characterized in that** the calcination to completion in the reaction vessel takes place under positive-pressure conditions, in particular between 2 and 4.5 bar positive pressure, preferably 2.5 to 3.5 bar positive pressure.

7. Method according to one of the preceding claims, **characterized in that** the dwell duration of the gypsum in the second stage is 6 to 40 minutes, preferably 10 to 25 minutes, more preferably 15 to 20 minutes.

8. Method according to one of the preceding claims, **characterized in that** the calcination in the second stage is realized at a temperature of less than 160°C, preferably between 120 and 150°C.

9. Method according to one of the preceding claims, **characterized by** setting of a content of water of crystallization in the transfer line of 8% to 20%, preferably of 10% to 16%, wherein preferably, the target content of water of crystallization is set to a value of 5 to 7%, more preferably 5.5 to 6.5%.

10. Method according to one of the preceding claims, **characterized in that** said method is carried out in a continuous manner.

11. Calcining installation for calcining gypsum, comprising as a first stage a calciner (3), which is designed for flash calcination, and as a second stage a reaction vessel (6), which is arranged therebehind in the direction of process flow and which is designed for calcination to completion, wherein the gypsum is guided via a transfer line (4) from the first stage to the second stage and is removed from the second stage via a discharge device (63),
**characterized in that**
the reaction vessel (6) is provided with an indirect heating means (65) and is designed in an autonomous manner in terms of vapour with a recirculation device (7) for water vapour.

12. Calcining installation according to Claim 11, **characterized in that** a regulation means (70) is provided, which is designed for variable recirculation in the reaction vessel (6) with differing degree of recirculation, preferably through removal of waste gas for the purpose of adaptation of the water vapour content in the second stage.

13. Calcining installation according to Claim 12, **characterized in that** the regulation means (70) is furthermore settable to an excessively high content of water of crystallization in the transfer line (4), which is greater than a target content of water of crystallization of the second stage.

14. Calcining installation according to one of Claims 11 to 13, **characterized in that** the reaction vessel (6) is designed in the form of a positive-pressure vessel.

15. Retrofit calcining reactor comprising a connection (62) for a transfer line (4), which line is designed for supplying gypsum from a flash calciner (3), and a retrofit reactor (6), which is arranged downstream of the flash calciner (3) as a second stage,
**characterized in that**
the retrofit reactor (6) is provided with an indirect heating means (65) and is designed in an autonomous manner in terms of vapour with a recirculation device (7) for water vapour.

16. Retrofit reactor according to Claim 15, **characterized in that** said reactor is designed in the form of a positive-pressure vessel, and/or a regulation means according to Claim 12 or 13 is provided.

17. Retrofit reactor according to Claim 15 or 16, **characterized in that** a discharge device (63) for the calcined gypsum and also a waste-air line (66) for vapour are arranged at the retrofit reactor (6).

18. Retrofit reactor according to Claim 17, **characterized in that** the waste-air line (66) for vapour is connected to the recirculation device (7) such that the vapour is directly introduced back into the retrofit reactor.

19. Retrofit reactor according to one of Claims 15 to 18, **characterized in that** the recirculation device (7) comprises a preferably regulable blower (73).

## Revendications

1. Procédé de calcination de gypse comprenant une première étape d'une calcination flash et une deuxième étape d'une calcination finale dans un récipient de réaction, le gypse étant acheminé, par l'intermédiaire d'une conduite de transfert, de la première étape vers la deuxième étape,
**caractérisé par**
un chauffage indirect qui a lieu dans la deuxième étape, de la vapeur d'eau étant recirculée dans la deuxième étape sans apport de vapeur et/ou d'eau externes.

2. Procédé selon la revendication 1, **caractérisé par** l'ajustement d'une teneur en eau de cristallisation excessive dans la conduite de transfert, qui est supérieure à une teneur en eau de cristallisation cible de la deuxième étape.

3. Procédé selon la revendication 1 ou 2, **caractérisé par** une recirculation variable avec un degré de recirculation différent, une teneur en eau de cristallisation cible du gypse souhaitée étant de préférence réglée, le degré de recirculation étant de préférence modifié par déchargement de gaz d'échappement pour adapter la teneur en vapeur d'eau dans la deuxième étape.

4. Procédé selon l'une quelconque des revendications précédentes, **caractérisé en ce que** la vapeur d'eau recirculée est recyclée par l'intermédiaire d'un dispositif de fluidisation dans un récipient de réaction pour la deuxième étape, le récipient de réaction étant de préférence chargé avec une surpression.

5. Procédé selon l'une quelconque des revendications précédentes, **caractérisé en ce que** la recirculation comprend un ventilateur réglable, un degré de recirculation souhaité étant de préférence ajusté par régulation du ventilateur.

6. Procédé selon l'une quelconque des revendications précédentes, **caractérisé en ce que** la calcination finale a lieu dans le récipient de réaction dans des conditions de surpression, notamment entre 2 et 4,5 bar de surpression, de préférence 2,5 à 3,5 bar de surpression.

7. Procédé selon l'une quelconque des revendications précédentes, **caractérisé en ce que** la durée de séjour du gypse dans la deuxième étape est de 6 à 40 minutes, de préférence de 10 à 25 minutes, de manière davantage préférée de 15 à 20 minutes.

8. Procédé selon l'une quelconque des revendications précédentes, **caractérisé en ce que** la calcination dans la deuxième étape a lieu à une température de moins de 160 °C, de préférence comprise entre 120 et 150 °C.

9. Procédé selon l'une quelconque des revendications précédentes, **caractérisé par** l'ajustement d'une teneur en eau de cristallisation dans la conduite de transfert de 8 % à 20 %, de préférence de 10 % à 16 %, la teneur en eau de cristallisation cible étant de préférence ajustée à une valeur de 5 à 7 %, de manière davantage préférée de 5,5 à 6,5 %.

10. Procédé selon l'une quelconque des revendications précédentes, **caractérisé en ce qu'**il est réalisé en continu.

11. Unité de calcination pour la calcination de gypse, comprenant un calcinateur (3), qui est configuré pour la calcination flash, en tant que première étape et un récipient de réaction (6) agencé derrière dans la direction de circulation du procédé, en tant que deuxième étape, qui est configuré pour la calcination finale, le gypse étant acheminé par une conduite de transfert (4) de la première étape vers la deuxième étape, et étant extrait de la deuxième étape par un dispositif d'évacuation (63),
**caractérisé en ce que**
le récipient de réaction (6) est muni d'un chauffage indirect (65) et est configuré sous forme autonome en vapeur avec un dispositif de recirculation (7) pour la vapeur d'eau.

12. Unité de calcination selon la revendication 11, **caractérisée en ce qu'**un réglage (70) est prévu, qui est configuré pour une recirculation variable dans le récipient de réaction (6) avec un degré de recirculation différent, de préférence par déchargement de gaz d'échappement pour adapter la teneur en vapeur d'eau dans la deuxième étape.

13. Unité de calcination selon la revendication 12, **caractérisée en ce que** le réglage (70) est en outre ajustable à une teneur en eau de cristallisation excessive dans la conduite de transfert (4), qui est supérieure à une teneur en eau de cristallisation cible de la deuxième étape.

14. Unité de calcination selon l'une quelconque des revendications 11 à 13, **caractérisée en ce que** le récipient de réaction (6) est configuré sous la forme d'un récipient de surpression.

15. Réacteur de calcination de mise à niveau comprenant un raccordement (62) pour une conduite de transfert (4), qui est configurée pour l'introduction de gypse à partir d'un calcinateur flash (3), et un réacteur de mise à niveau (6), qui est raccordé en aval du calcinateur flash (3) en tant que deuxième étape,
**caractérisé en ce que**
le réacteur de mise à niveau (6) est muni d'un chauffage indirect (65) et est configuré sous forme autonome en vapeur avec un dispositif de recirculation (7) pour la vapeur d'eau.

16. Réacteur de mise à niveau selon la revendication 15, **caractérisé en ce qu'**il est réalisé sous la forme d'un récipient de surpression et/ou **en ce qu'**un réglage selon la revendication 12 ou 13 est prévu.

17. Réacteur de mise à niveau selon la revendication 15 ou 16, **caractérisé en ce qu'**un dispositif d'évacuation (63) pour le gypse calciné et en outre une conduite d'air d'échappement (66) pour la vapeur d'eau sont agencés sur le réacteur de mise à niveau (6).

18. Réacteur de mise à niveau selon la revendication 17, **caractérisé en ce que** la conduite d'air d'échappement (66) pour la vapeur est raccordée avec le dispositif de recirculation (7) de telle sorte que la vapeur soit réintroduite directement dans le réacteur de mise à niveau.

19. Réacteur de mise à niveau selon l'une quelconque des revendications 15 à 18, **caractérisé en ce que** le dispositif de recirculation (7) comprend un ventilateur (73) de préférence réglable.
